# EUROPEAN PATENT APPLICATION

(11) **EP 3 196 255 A1**
(43) Date of publication of application: **26.07.2017**
(21) Application number: 15821354.6
(22) Date of filing: 07.07.2015
(51) Int. Cl.: C08L 95/00, C08L 53/02, C08L 9/06, C08L 9/00, C08L 9/02, C08L 7/00, C08L 19/00, C08L 97/00, C08K 5/10, C08K 5/57, C08K 5/521, C08K 5/098, C08K 5/5415, C08K 5/5419, C08K 5/5435, E04D 5/02, D06N 5/00

(54) **REACTIVE MODIFIED ASPHALT AND METHOD FOR PRODUCING SAME**

(30) Priority: 12.07.2014 CN 201410330290
(71) Applicant: Guangxi Golden Umbrella Waterproofing Co. Ltd., Nanning, Guangxi 530001 (CN)
(72) Inventor: LU, Guicai, Nanning Guangxi530001 (CN); ZHU, Fangwu, Nanning Guangxi 530001 (CN); WU, Shengjiang, Nanning Guangxi 530001 (CN); GUO, Wenxiong, Nanning Guangxi 530001 (CN); CHEN, Libin, Nanning Guangxi 530001 (CN); LU, Shanqing, Nanning Guangxi 530001 (CN)
(74) Representative: Patentanwälte Bauer Vorberg Kayser
(86) International application number: PCT/CN2015/083496
(87) International publication number: WO 2016/008371

(57) **Abstract**

The present invention provides a reactive modified asphalt and a method for producing same; in particular, a reaction-bonded modified asphalt that can be subjected, with concrete, to chemical cross-linking and a physical fitting effect is provided; the reactive modified asphalt is prepared using starting materials comprising asphalt, a rubber modifier, and a waterproof bridging agent; one end of the waterproof bridging agent is combined with the C=C double bond, carboxyl (-COOH), and carboxyl (-OH) in the asphalt, and the other end is combined with the hydroxyl or acid radical generated after cement hydration; a chemical cross-linking reaction is performed with concrete; the modified material is tightly joined with cement into an integral body; the relevant parts have the function of a chemical bond, and after curing, have an irreversible bonding effect; during the process of solidification of the cement, the waterproof material creeps into and penetrates the pores of the cement gel and concrete, achieving a tight bonding effect that is tight, firm, and irreversible.

## Description

### CROSS REFERENCE TO RELATED APPLICATIONS

This application is national phase of International Application No. PCT/CN2015/083496, filed on July 7, 2015, which is based upon and claims priority to Chinese Patent Application No. 2014103302906, filed on July 12, 2014, the entire contents of which are incorporated herein by reference.

### Field of the Invention

The present invention relates to a reactive modified asphalt, particularly a modified asphalt which can have chemical reaction with cement concrete so as to form chemical cross-linking and physical fitting effect, and discloses a method for production same.

### Background of the Invention

Modified asphalt is obtained by adding into asphalt an admixture (modifier) such as rubber, resin, high molecular polymer, fine-grained rubber powder or other fillers, or by adopting the measures such as mild oxidation process of the asphalt, and these methods make the asphalt not easy to brittle in low temperature, and not easy to flow in high temperature. There are two mechanisms for obtaining the modified asphalts, one of the mechanisms is realized by changing the chemical composition of the asphalt, and the other is realized by making the modifier distribute uniformly in asphalt so as to form a certain space net structure. Currently, the modified asphalts on the market mainly comprises: 1. rubber and thermoplastic elastomer modified asphalt comprising natural rubber modified asphalt, SBS modified asphalt (most widely used), styrene butadiene rubber modified asphalt, chloroprene rubber modified asphalt, cis-butadiene rubber modified asphalt, butyl rubber modified asphalt, waste rubber and reclaimed rubber modified asphalt, and other rubber modified asphalt (such as ethylene propylene rubber, nitrile butadiene rubber etc.); 2. plastic and synthetic resin modified asphalt comprising polyethylene modified asphalt, ethylene-vinyl acetate copolymer modified asphalt, polystyrene modified asphalt, cumarone resin modified asphalt, epoxy resin modified asphalt and α-olefin random polymer modified asphalt; 3. blended type high molecular polymer modified asphalt: the asphalt is modified by adding simultaneously two or more than two polymers into the asphalt, said more than two polymers could be two separate high molecular polymers, and also could be so-called polymer alloy having the interpenetrating high-molecular polymer network that formed by blending high molecular polymers preliminarily. The usage of the above said modified asphalt in the construction is similar with that of hot melt glue, that is heating up the modified asphalt with fire to melt, then using it in the construction. Because the bonding strength between the modified asphalt and the base surface depends on physical adsorption force, the bonding strength is not strong and is reversible, when the modified asphalt is used as waterproof material, the thermal expansion and contraction movement of the base surface may lead to degumming which may easily causes water channeling and bulging phenomenon, and eventually causes cracking of waterproof layer and loss of waterproofness.

For the problem that when used as waterproof material, the current modified asphalt is not strong in bonding strength and is inconvenient in construction, Chinese Patent of which the inventors are LU Guicai etc., the application (patent) No. is CN200910114456.X, the title is waterproof coil bonding to concrete by synergism of chemical crosslinking and physical fitting joint, publication (Notification) No. is CN101694114A, the applicant (patentee) is Guangxi Golden Umbrella Waterproof and Decoration Co., Ltd., discloses a waterproof coiled material capable of bonding to cement concrete by synergism of chemical crosslinking and physical fitting joint, the waterproof glue used in waterproof coil is obtained by adding waterproof bridging agent which is capable of carrying out chemical crosslinking reaction with cement concrete, into the modified asphalt, wherein the waterproof bridging agent is polymethyl ethoxy silane or sodium poly[(naphthaleneformaldehyde) sulfonate]. Since the active groups of these waterproof bridging agents could carry out chemical crosslinking reaction with cement concrete, the bonding strength between the modified asphalt gum and the base surface is strong and irreversible, further the waterproofness is extremely prominent.

Hot melt method or wet installed method can be applied when the modified asphalt gum is used in construction, and the modified asphalt gum is simple in construction, and is high in construction efficiency. However, price of polymethyl ethoxy silane as the raw material is relatively high, inducing the price of the product expensive, and although there is certain superiority in the price of the product obtained from sodium poly[(naphthaleneformaldehyde) sulfonate], said product will decompose slowly during use procedure, and produce hazardous substances such as formaldehyde.

### Summary of the Invention

The present invention aims to disclose a reactive modified asphalt and method for producing same, the modified asphalt is one capable of carry out chemical reaction with cement concrete so as to form chemical cross-linking and physical fitting effect, waterproof bridging agent used in the reactive modified asphalt is low in cost, not easy to decompose and release harmful substances, high in activity, strong in chemical cross linking strength with cement concrete.

The technical solutions of the present invention comprise:

Reactive modified asphalt, comprises asphalt, rubber modifier and waterproof bridging agent, the composition of each raw material is as follows: asphalt 40-80 parts by weight; rubber modifier 8-20 parts by weight; waterproof bridging agent 0.1-5 parts by weight.

The asphalt is petroleum asphalt of No. 50-130.

The rubber modifier is one or a mixture of more than one of SBS thermoplastic styrene-butadiene-styrene rubber modifier, SBR styrene-butadiene rubber modifier, APP atactic polypropylene asphalt modifier, IIR butyl rubber modifier or CR chloroprene rubber modifier, BR cis-butadiene rubber modifier, IR isoprene rubber modifier, SIS styrene-isoprene-styrene block copolymer modifier, SEBB modifier, SEBS modifier, NR natural rubber modifier, EPDM ethylene propylene diene monomer modifier, EPR ethylene propylene rubber, SIR silicone rubber, and NBR nitrile butadiene rubber.

One end of the waterproof bridging agent combines with groups of asphalt such as C = C double bond, -OH and -COOH, and the other end combines with hydroxyl or acidic group generated in the process of cement hydration, and carries out a chemical cross-linking reaction with concrete which combines the modified glue stock and cement tightly as an integral whole.

The waterproof bridging agent is a compound or mixture that comprises multiple functional groups in one molecule, one part of the functional groups in the molecular could carry out crosslinking reaction with asphalt so as to strengthen the network structure formed by asphalt and modifier, and to improve the physical properties of modified asphalt, and the other part of the functional groups could carry out chemical reaction with cement concrete, causing synergism of chemical crosslinking and a physical fitting effect, so as to make the modified asphalt adsorbed firmly onto the cement, forming firm and tight waterproof layer.

The waterproof bridging agent comprises any one or a composition of silane waterproof bridging agent, bi-metal waterproof bridging agent, lignin waterproof bridging agent, tin waterproof bridging agent, zirconium waterproof bridging agent, phosphate waterproof bridging agent or rare earth waterproof bridging agent.

The bi-metal waterproof bridging agent is zircoaluminate waterproof bridging agent and aluminium titanium coupling agent.

The lignin waterproof bridging agent is a lignin type macromolecule organic mixture which is by-product of papermaking industry.

The tin waterproof bridging agent is tin tetrachloride, trioctyltin chloride or dioctyltin dichloride.

The zirconium waterproof bridging agent is tetra n-butyl zirconate, tetraamyl zirconate or tetraoctyl zirconate.

The phosphate waterproof bridging agent is di-n-butyl methyl phosphate, di-n-butyl ethyl phosphate, dioctyl methyl phosphate or dioctyl ethyl phosphate.

The rare earth waterproof bridging agent is lauric acid rare earth compound or stearic acid rare earth compound.

The silane waterproof bridging agent is any one of alkenyl siloxane, amino siloxane, chlorine hydrocarbyl siloxane, methacryloxy siloxane, epoxy siloxane or compositions thereof.

The alkenyl siloxane is vinyl trichlorosilane, vinyl trimethoxy silane, vinyl triethoxy silane, vinyl tri(β-methoxyethoxy) silane, vinyl triacetoxy silane, tri-t-butoxy vinyl silane, vinyl tri -tert-butyl peroxy-silane, allyl trimethoxy silane or allyl triethoxy silane;
The amino siloxane is anilino methyl trimethoxy silane, anilino methyl triethoxy silane, N-(4-amino butyl) amino methyl triethoxy silane, γ-amino propyl trimethoxy silane, (3-amino propyl) triethoxy silane, N-methyl-3-aminopropyl trimethoxy silane, N-phenyl-3-amino propyl trimethoxy silane, γ-(β-aminoethyl) aminopropyl trimethoxy silane, γ-(β-aminoethyl) aminopropyl methyl dimethoxy silane, γ-divinyl triamino propyl trimethoxy silane, 3-aminophenyl trimethoxy silane, 2-(4-N-benzyl ethidene diamine) ethyl trimethoxy silane or N,N-di(2-ethoxyl)-3-aminopropyl triethoxy silane.

The chlorine hydrocarbonyl siloxane is γ-chloropropyl trichlorosilane, γ-chloropropyl trimethoxy silane, γ-chloropropyl triethoxy silane or 2-(4-benzyl chloride) ethyl trimethoxy silane.

The methacryloyloxy siloxane is γ-methacryloyloxy propyl trichlorosilane, γ-methacryloyloxy propyl trimethoxy silane, γ-methacryloyloxy propyl tri(β-methoxy ethoxy) silane or γ-methacryloyloxy propyl tri(trimethyl siloxy) silane.

The epoxy siloxane is 3-(2,3 epoxy propoxy) propyl trimethoxy silane, β-(3,4 epoxy cyclohexyl) ethyl trimethoxy silane, β-(3,4 epoxy cyclohexyl) ethyl triethoxy silane or β-(3,4 epoxy cyclohexyl) ethyl methyl diethoxyl silane.

The method of producing the reactive modified asphalt in the invention, comprises the following steps: stirring modifier and petroleum asphalt under 110 °C-130 °C, swelling for 0.5 h; heating up to 180 °C-220 °C, modifying for 1-2 h, adding waterproof bridging agent, and stirring for 0.5 h, thereby obtaining the reactive modified asphalt.

Use of the reactive modified asphalt in the present invention can be that the reactive modified asphalt is used directly as waterproof glue or is scraped on polymer film, polymer sheet, polyester non-woven cloth, metal sheet or fiberglass fabric to obtain waterproofing sheets.

The positive effects of the invention are as follows: the reactive modified asphalt could carry out chemical reaction with cement concrete to produce chemical cross-linking and physical fitting effect which is just like to build a waterproof bridge, also the reactive modified asphalt is strong in bonding strength with base surface to form tight waterproof layer of skin type, is not easy to be degummed due to displacement of base surface, is long in service life, does not decompose during using process to produce hazardous substances, the reactive modified asphalt can use hot melt method or wet installed method in construction, is simple to construct, is high in efficiency, can avoid open flame and fire hazards in construction, and is high in construction safety.

The above said waterproof bridging agent is a compound or mixture that comprises multiple functional groups in one molecule, one part of the functional groups in the molecular could carry out crosslinking reaction with asphalt or rubber modifier so as to strengthen the network structure formed by asphalt and modifier, and to improve the physical properties of modified asphalt, and the other part of the functional groups could carry out chemical reaction with cement concrete, causing synergism of chemical crosslinking and a physical fitting effect, so as to make the modified asphalt adsorbed firmly onto the cement, forming firm and tight waterproof layer. These materials could be any one of bi-metal waterproof bridging agent, lignin waterproof bridging agent, tin waterproof bridging agent, zirconium waterproof bridging agent, phosphate waterproof bridging agent, rare earth waterproof bridging agent or compositions thereof, the bi-metal waterproof bridging agent is zircoaluminates waterproof bridging agent; the lignin waterproof bridging agent is a lignin type macromolecule organic mixture which is by-product of papermaking industry, and the lignin molecular comprises multiple active groups such as hydroxyl, carboxyl, methoxy, which could carry out chemical reaction with silicate in cement concrete; the tin waterproof bridging agent is tin tetrachloride, trioctyltin chloride or dioctyltin dichloride; the zirconium waterproof bridging agent is tetra n-butyl zirconate, tetraamyl-zirconate or tetraoctyl zirconate; the phosphate waterproof bridging agent is di-n-butyl methyl phosphate, di-n-butyl ethyl phosphate, dioctyl methyl phosphate or dioctyl ethyl phosphate; the rare earth waterproof bridging agent is the product obtained by the reaction between organic acid and rare earth oxide at a mole ratio of about 1:1, commonly used rare earth waterproof bridging agent is lauric acid rare earth compound or stearic acid rare earth compound. Rare earth is strong in chelating properties, which could form very strong chemical chelate bond with silicate compound in cement.

### Detailed Description of the Embodiments

### EXAMPLE 1

40 parts of petroleum asphalt of No. 50 is added into reaction still, into which 8 parts of SBS rubber modifier is added, obtained reaction system is heated up to 110°C-115°C and stirred for 30 min, then is heated up to 180 °C-185 °C and continues reacting for 1 h under stirring, then the reaction system is added with 0.5 parts of zircoaluminate waterproof bridging agent and stirred for 30 min, and is cooled to 120 °C-130 °C to obtain the reactive modified asphalt which is painted onto non-woven cloth to manufacture waterproofing sheets.

### EXAMPLE 2

60 parts of petroleum asphalt of No. 90 is added into reaction still, into which 12 parts of SBR rubber modifier is added, obtained reaction system is heated up to 115 °C-120 °C and stirred for 30 min, then is heated up to 185 °C-190 °C and continues reacting for 1.5 h under stirring, then the reaction system is added with 2 parts of trioctyltin chloride and stirred for 30 min, and is cooled to 120 °C-130 °C to obtain the reactive modified asphalt, which is smeared onto non-woven cloth to manufacture waterproofing sheets.

### EXAMPLE 3

66 parts of petroleum asphalt of No. 90 is added into reaction still, into which 4 parts of SBS rubber modifier and 12 parts of SBR rubber modifier are added, obtained reaction system is heated up to 115 °C-120 °C and stirred for 30 min, then is heated up to 185 °C-190 °C and continues reacting for 1.5 h under stirring, then the reaction system is added with 3 parts of di-n-butyl ethyl phosphate and stirred for 30 min, and is cooled to 120 °C-130 °C to obtain the reactive modified asphalt, which is smeared onto non-woven cloth to manufacture waterproofing sheets.

### EXAMPLE 4

70 parts of petroleum asphalt of No. 100 is added into reaction still, into which 8 parts of SIS rubber modifier and 8 parts of cis-butadiene rubber modifier are added, obtained reaction system is heated up to 120 °C-130 °C and stirred for 30 min, then is heated up to 190 °C-195 °C and continues reacting for 2 h under stirring, then the reaction system is added with 5 parts of stearic acid rare earth compound and stirred for 30min, and is cooled to 120 °C-130 °C to obtain the reactive modified asphalt which is smeared onto non-woven cloth to manufacture waterproofing sheets.

### EXAMPLE 5

60 parts of petroleum asphalt of No. 90 is added into reaction still, into which 4 parts of SBR rubber modifier and 4 parts of SEBS modifier are added, obtained reaction system is heated up to 125 °C-130 °C, and stirred for 30 min, then is heated up to 195 °C-200 °C and continues reacting for 2 h under stirring, then the reaction system is added with 1 part of tetra n-butyl zirconate and 2 parts of lignin waterproof bridging agent and stirred for 30 min, and is cooled to 120 °C-130 °C, discharged to obtain the reactive modified asphalt which is smeared onto non-woven cloth to manufacture waterproofing sheets.

### EXAMPLE 6

80 parts of petroleum asphalt of No. 130 is added into reaction still, into which 12 parts of IR isoprene rubber modifier and 8 parts of APP (APAO) asphalt modifier are added, obtained reaction system is heated up to 125 °C-130 °C and stirred for 30 min, then heated up to 195 °C -200 °C and continues reacting for 1.5 h under stirring, then the reaction system is added with 1 part of dioctyltin dichloride and stirred for 30 min, and is cooled to 120 °C-140 °C to obtain the reactive modified asphalt which can be directly used as waterproof glue.

### EXAMPLE 7

75 parts of petroleum asphalt of No. 100 is added into reaction still, into which 2 parts of SBS rubber modifier and 8 parts of chloroprene rubber modifier are added, obtained reaction system is heated up to 125 °C-130 °C and stirred for 30 min, then is heated up to 195 °C-200 °C and continues reacting for 1.5 h under stirring, then the reaction system is added with 0.6 part of lauric acid rare earth compound and stirred for 30min, and is cooled to 130 °C-150 °C to obtain the reactive modified asphalt which can be directly used as waterproof glue.

### EXAMPLE 8

40 parts of petroleum asphalt of No. 70 is added into reaction still, into which 8 parts of SBS rubber modifier is added, obtained reaction system is heated up to 110 °C-115 °C and stirred for 30 min, then is heated up to 180 °C-185 °C and continues reacting for 1 h under stirring, then the reaction system is added with 0.5 part of vinyl triacetoxy silane and stirred for 30 min to obtain the reactive modified asphalt which is smeared onto non-woven cloth to manufacture waterproofing sheets.

### EXAMPLE 9

60 parts of petroleum asphalt of No. 90 is added into reaction still, into which 12 parts of SBR rubber modifier is added, obtained reaction system is heated up to 115 °C -120 °C and stirred for 30 min, and then is heated up to 185 °C-190 °C and continues reacting for 1.5 h under stirring, then the reaction system is added with 2 parts of N-phenyl-3-amino propyl trimethoxy silane and stirred for 30 min to obtain the reactive modified asphalt which is smeared onto high density polyethylene films to manufacture waterproofing sheets.

### EXAMPLE 10

66 parts of petroleum asphalt of No. 90 is added into reaction still, into which 4 parts of SBS rubber modifier and 12 parts of SBR rubber modifier are added, obtained reaction system is heated up to 115 °C-120 °C and stirred for 30 min, then is heated up to 185 °C-190 °C and continues reacting for 1.5 h under stirring, then the reaction system is added with 3 parts of γ-chloropropyl triethoxy silane, and stirred for 30 min to obtain the reactive modified asphalt, which is smeared onto non-woven cloth to manufacture waterproofing sheets.

### EXAMPLE 11

70 parts of petroleum asphalt of No. 100 is added into reaction still, into which 8 parts of SIS rubber modifier and 8 parts of cis-butadiene rubber modifier are added, obtained reaction system is heated up to 120 °C-130 °C and stirred for 30 min, then is heated up to 190 °C-195 °C and continues reacting for 2 h under stirring, then the reaction system is added with 5 parts of γ-methacryloyloxy propyl tri(trimethyl siloxy) silane and stirred for 30 min to obtain the reactive modified asphalt which is smeared onto non-woven cloth to manufacture waterproofing sheets.

### EXAMPLE 12

60 parts of petroleum asphalt of No. 90 is added into reaction still, into which 4 parts of SBR rubber modifier and 4 parts of SEBS modifier are added, obtained reaction system is heated up to 125 °C-130 °C and stirred for 30 min, then is heated up to 195 °C-200 °C and continues reacting for 2 h under stirring, then the reaction system is added with 3 parts of β-(3,4-epoxy cyclohexyl) ethyl methydiethoxy silane and stirred for 30 min, and discharged to obtain the reactive modified asphalt which is smeared onto non-woven cloth to manufacture waterproofing sheets.

### EXAMPLE 13

80 parts of petroleum asphalt of No. 120 is added into reaction still, into which 12 parts of isoprene rubber modifier and 8 parts of APP (APAO) asphalt modifier are added, obtained reaction system is heated up to 125 °C-130 °C and stirred for 30 min, then is heated up to 195 °C-200 °C and continues reacting for 1.5 h under stirring, then the reaction system is added with 1 part of allyl trimethoxy silane and stirred for 30 min to obtain the reactive modified asphalt which can be directly used as waterproof glue.

### EXAMPLE 14

75 parts of petroleum asphalt No. 100 is added into reaction still, into which 7 parts of SBS rubber modifier and 8 parts of chloroprene rubber modifier are added, obtained reaction system is heated up to 125 °C-130 °C and stirred for 30 min, then is heated up to 195 °C-200 °C and continues reacting for 1.5 h under stirring, then the reaction system is added with 0.6 part of β-(3,4 epoxy cyclohexyl) ethyl trimethoxy silane and stirred for 30 min to obtain the reactive modified asphalt which can be directly used as waterproof glue.

### EXAMPLE 15

50 parts of petroleum asphalt No. 120 is added into reaction still, into which 15 parts of cis-butadiene rubber modifier is added, obtained reaction system is heated up to 125 °C-130 °C and stirred for 30 min, then is heated up to 195 °C-200 °C and continues reacting for 1.5 h under stirring, then the reaction system is added with 4.1 parts of vinyl tri(β-methoxyethoxy) silane waterproof bridging agent and stirred for 30 min to obtain the reactive modified asphalt which can be directly used as waterproof glue.

### COMPARISON EXAMPLE

66 parts of petroleum asphalt No. 90 is added into reaction still, into which 4 parts of SBS rubber modifier and 12 parts of SBR rubber modifier are added, obtained reaction system is heated up to 125 °C-130 °C and stirred for 30 min, then is heated up to 195 °C-200 °C and continues reacting for 1.5 h under stirring, and is cooled to 130°C-150°C to obtain common modified asphalt which can be used for producing waterproofing sheets.

According to the detection method disclosed in GB/T 23457-2009 "pre-applied and wet installed waterproofing sheets", the waterproof materials obtained from the above examples are tested, and the results are shown in below Table 1:

**Table 1**

| Project | Bonding strength with cement / MPa | Low Temperature Flexibility / °C | High Temperature Performance / °C |
|---|---|---|---|
| Example 1 | 2.11-2.17 | -23 | 79 |
| Example 2 | 4.22-4.25 | -30 | 70 |
| Example 3 | 4.01-4.09 | -27 | 73 |
| Example 4 | 3.66-3.71 | -25 | 81 |
| Example 5 | 3.24-3.29 | -24 | 74 |
| Example 6 | 3.01-3.10 | -22 | 80 |
| Example7 | 5.19-5.24 | -25 | 85 |
| Example 8 | 4.78-4.81 | -20 | 73 |
| Example 9 | 3.78-3.83 | -22 | 72 |
| Example 10 | 3.79-3.85 | -21 | 76 |
| Example 11 | 5.73-5.89 | -28 | 89 |
| Example 12 | 4.12-4.33 | -25 | 77 |
| Example 13 | 5.34-5.41 | -18 | 87 |
| Example 14 | 5.01-5.12 | -17 | 83 |
| Comparison Example | 2.05-2.17 | -15 | 76 |

The construction method of the coiled waterproof material prepared of the reactive modified asphalt obtained from the present invention, comprises the following steps:
1. Base surface being cleaned, wetted with water, paved with cement slurry or cement mortar with thickness of 0.5 mm-2 mm;
2. Stripping isolating membrane from the waterproof material, brushing cement slurry with thickness of 0.2 mm-0.5 mm on the surface;
3. Paving the waterproofing sheets with cement slurry on the base surface, pressing lightly the surface of the sheets, ejecting gas; and
4. Maintaining for 1-2 days, hard drying the cement slurry or cement mortar to form the compact waterproof layer.

From the above construction procedure it can be seen, the construction of the reactive modified asphalt waterproof coil does not need open-flame to heat the coil, the construction is high in security and simple, the high bonding strength is formed between the waterproof layer and base surface of the cement, which can be up to 5 MPa or more than 5 MPa, therefore, the waterproofness is superior to the traditional waterproof materials.

## Claims

1. Reactive modified asphalt, of which raw material composition comprising the following raw material parts by weight: asphalt 40-80; rubber modifier 8-20; waterproof bridging agent 0.1-5;
one end of the waterproof bridging agent combining with groups of the asphalt such as C = C double bond, -OH, -COOH, and the other end of the waterproof bridging agent combining with hydroxyl or acidic group generated in the process of cement hydration and performing a chemical cross-linking reaction with concrete, making modified asphalt and cement combined tightly into an integral whole, and after curing, function of a chemical bond existing in relevant parts making bonding irreversible.

2. The reactive modified asphalt according to claim 1, wherein the rubber modifier is one or a mixture of more than one of thermoplastic styrene-butadiene-styrene rubber (SBS) modifier, styrene-butadiene rubber (SBR) modifier, atactic polypropylene (APP) asphalt modifier, butyl rubber (IIR) or chloroprene rubber (CR) modifier, cis-butadiene rubber (BR) modifier, isoprene rubber (IR) modifier, styrene isoprene-styrene block copolymer (SIS) modifier, SEBB modifier, SEBS modifier, natural rubber (NR) modifier,ethylene propylene diene monomer (EPDM) modifier, ethylene propylene rubber (EPR), silicone rubber (SIR) and nitrile butadiene rubber (NBR).

3. The reactive modified asphalt according to claim 1, wherein the asphalt is natural asphalt or petroleum asphalt of No. 50-130.

4. The reactive modified asphalt according to claim 1, wherein the waterproof bridging agent is any one or a mixture of more than one of silane waterproof bridging agent, bi-metal waterproof bridging agent, lignin waterproof bridging agent, tin waterproof bridging agent, zirconium waterproof bridging agent, phosphate waterproof bridging agent or rare earth waterproof bridging agent.

5. The reactive modified asphalt according to claim 4, wherein the bi-metal waterproof bridging agent is zircoaluminate waterproof bridging agent and aluminium titanium coupling agent.

6. The reactive modified asphalt according to claim 4, wherein the lignin waterproof bridging agent is a lignin type macromolecule organic mixture which is by-product of papermaking industry.

7. The reactive modified asphalt according to claim 4, wherein the tin waterproof bridging agent is tin tetrachloride, trioctyltin chloride or dioctyltin dichloride.

8. The reactive modified asphalt according to claim 4, wherein the zirconium waterproof bridging agent is tetra n-butyl zirconate, tetraamyl-zirconate or tetraoctyl zirconate.

9. The reactive modified asphalt according to claim 4, wherein the phosphate waterproof bridging agent is di-n-butyl methyl phosphate, di-n-butyl ethyl phosphate, dioctyl methyl phosphate or dioctyl ethyl phosphate.

10. The reactive modified asphalt according to claim 4, wherein the rare earth waterproof bridging agent is lauric acid rare earth compound or stearic acid rare earth compound.

11. The reactive modified asphalt according to claim 4, wherein the silane waterproof bridging agent is any one or a mixture of more than one of alkenyl siloxane, amino siloxane, chlorine hydrocarbyl siloxane, methacryloxy siloxane or epoxy siloxane.

12. The reactive modified asphalt according to claim 11, wherein the alkenyl siloxane is vinyl trichlorosilane, vinyl trimethoxy silane, vinyl triethoxy silane, vinyl tri(β-methoxyethoxy) silane, vinyl triacetoxy silane, tri-t-butoxy vinyl silane, vinyl tri-tert-butyl peroxy-silane, allyl trimethoxy silane or allyl triethoxysilane;
the amino siloxane is anilino methyl trimethoxy silane, anilino methyl triethoxy silane, N-(4-amino butyl) amino methyl triethoxy silane, γ-amino propyl trimethoxy silane, (3-amino propyl) triethoxy silane, N-methyl-3-aminopropyl trimethoxy silane, N-phenyl-3-amino propyl trimethoxy silane, γ-(β-aminoethyl) aminopropyl trimethoxy silane, γ-(β-aminoethyl) aminopropyl methyl dimethoxy silane, γ-divinyl triamino propyl trimethoxy silane, 3-aminophenyl trimethoxy silane, 2-(4-N-benzyl ethidene diamine) ethyl trimethoxy silane or N,N-di(2-ethoxyl)-3-aminopropyl triethoxy silane;
the chlorine hydrocarbonyl siloxane is γ-chloropropyl trichlorosilane, γ-chloropropyl trimethoxy silane, γ-chloropropyl triethoxy silane or 2-(4-benzyl chloride) ethyl trimethoxy silane;
the methacryloyloxy siloxane is γ-methacryloyloxy propyltrichloro-silane, γ-methacryloyloxy propyltrimethoxy silane, γ-methacryloyloxy propyl tri(β-methoxy ethoxyl) silane or γ-methacryloyloxy propyl tri(trimethyl siloxy) silane;
the epoxy siloxane is 3-(2,3 epoxy propoxy) propyl trimethoxy silane, β-(3,4 epoxy cyclohexyl)ethyl trimethoxy silane, β-(3,4 epoxy cyclohexyl)ethyl triethoxy silane or β-(3,4 epoxy cyclohexyl) ethyl methyl diethoxyl silane.

13. A production method of the reactive modified asphalt according to claim 1, comprising the following steps: stirring modifier and petroleum asphalt under 110 °C-130 °C, swelling for 0.5 h; heating up to 180 °C-220 °C, modifying for 1-2 h, adding the waterproof bridging agent, and stirring for 0.5 h, thereby obtaining the reactive modified asphalt.

14. Use of the reactive modified asphalt according to claim 1, in manufacture of products of waterproofing sheets or waterproof glue.
